# EUROPEAN PATENT APPLICATION

(11) **EP 4 600 480 A1**
(43) Date of publication of application: **13.08.2025**
(21) Application number: 23882217.5
(22) Date of filing: 25.08.2023
(51) Int. Cl.: F02M 35/16, B60K 13/02, F02M 35/10

(54) **AIR INTAKE DUCT STRUCTURE FOR VEHICLE**

(30) Priority: 27.10.2022 JP 2022172694
(71) Applicant: Daimler Truck AG, 70771 Leinfelden-Echterdingen (DE)
(72) Inventor: YOSHINO, Hironori, Kawasaki-shi, Kanagawa 211-8522 (JP)
(74) Representative: Hofstetter, Schurack & Partner
(86) International application number: PCT/JP2023/030746
(87) International publication number: WO 2024/090002

(57) **Abstract**

An air intake duct structure includes a hollow air intake unit (33) that includes an air intake opening and that communicates with an intake duct main body; and an air intake guide member (40) that is provided inside the air intake unit, wherein the air intake guide member (40) includes a first guide part (41) including a first top face part and a first side face (41b) part protruding from the air intake opening to a deep side of the air intake unit, and a first front face part (41c) being arranged in the air intake unit on a deep side air intake unit and a second guide part (42) that is arranged on an intake downstream side further than the first guide part in the air intake unit side by side and that includes a second top face part and a second side face part (42b) protruding from the air intake opening to the deep side of the air intake unit, and a second front face part (42c) being arranged on the deep side of the air intake unit, a protruding amount first guide part (41) to the deep side of the air intake unit is larger than a protruding amount of the second guide part (42) the deep side of the air intake unit, and a first corner part (41g) that connects the first side face part (41b) and the first front face part (41c) has a curvature smaller than a curvature of the curved surface of the second corner part (42g) that connects the second side face part (42b) and the second front face part (42c).

## Description

### [Technical Field]

The present invention relates to an air intake duct structure for vehicle preferably used for supplying air to a power apparatus, such as an internal combustion engine and a fuel cell, of a vehicle.

### [Background Art]

A vehicle is provided with an intake duct for feeding air to a power apparatus such as an internal combustion engine or a fuel cell.

Conventionally, an intake duct has been known which is attached to a cab of a vehicle such as a truck. For example, Patent Document 1 discloses an intake duct arranged above a cab.

### [Citation List]

### [Patent Literature]

[Patent Literature 1] JP 2018-165063 A

### [Summary of Invention]

### [Technical Problem]

Incidentally, the intake duct sometimes takes rainwater and the like mixed in outside air.

Therefore, in order to prevent rainwater or the like from entering a power source such as an engine, a water separating unit that separates air and water may be provided in the intake-side opening of the intake duct.

However, depending on the structure of the water separating unit, turbulence of the intake air flow may occur in the intake duct, which may be a cause of deterioration of the water separatability.

With the above problems in view, one of the objects of the present disclosure is to provide an air intake structure for a vehicle capable of enhancing water separatability.

### [Solution to Problem]

The present invention is made to solve at least a part of the above problems, and can be achieved as the following embodiment and application.
(1) An air intake duct structure for a vehicle according to the present application takes outside air into a power apparatus of the vehicle and includes a hollow air intake unit that includes an air intake opening provided along a vehicle surface of the vehicle and that communicates with an intake duct main body on an intake downstream side thereof; and an air intake guide member that is provided inside the air intake unit. The air intake guide member includes a first guide part that is arranged in the air intake unit on an intake upstream side and that includes a first top face part and a first side face part protruding from the air intake opening to a deep side of the air intake unit and being continuous to each other, and a first front face part being arranged in the air intake unit on a deep side of air intake unit and being smoothly continuous to the first top face part and the first side face part, and that guides outside air entering through the air intake opening to the downstream side, and a second guide part that is arranged on the intake downstream side further than the first guide part in the air intake unit side by side and that includes a second top face part and a second side face part protruding from the air intake opening to the deep side of the air intake unit and being continuous to each other, and a second front face part being arranged on the deep side of the air intake unit and being smoothly continuous to the second top face part and the second side face part, and that guides the outside air entering through the air intake opening to the downstream side. A protruding amount first guide part to the deep side of the air intake unit is larger than a protruding amount of the second guide part the deep side of the air intake unit. A curvature of a curved surface of a first corner part that makes the first side face part and the first front face part of the first guide part smoothly continuous is set smaller than a curvature of a curved surface of a second corner part that makes the second side face part and the second front face part of the second guide part smoothly continuous.

According to this application example, the outside air (intake air) that has flowed from through the air intake opening into the hollow air intake unit is guided by the first guide part and the second guide part of the air intake guide member and flows out to the intake air duct main body on the intake downstream side. At this time, the intake air flow is guided by the first top face part, the first side face part, and the first front face part in the first guide part, and is guided by the second top face part, the second side face part, and the second front face part in the second guide part. The intake air flow is curved by being guided by the first side face part and the first front face part and the first corner part that smoothly connects these parts, and is curved by being guided by the second side face part and the second front face part and the second corner part that smoothly connects these parts. Since the curvature of the curved surface of the first corner part which comes outer side of the curve is set smaller than the curvature of the curved surface of the second corner part which comes inner side of the curve, intake air flows guided by the respective guide parts are less likely to interfere with each other, so that the generation of turbulence of the intake air flows can be suppressed. This can enhance the water separatability.

In the first guide part, the first front face part that receives the inflow of the outside air mainly captures the moisture in the outside air, and in the second guide part, the second front face part that receives the inflow to the outside air mainly captures the moisture in the outside air. Consequently, air from which water is removed is fed to the intake duct main body.

(2) Preferably, the air intake unit may include a side face wall part arranged on the intake upstream side and extending from the air intake opening to the deep side of the air intake unit, and a front face wall part smoothly and continuously extending from the side face wall part to the intake downstream side through a corner wall part, and a curvature of the corner wall part may be set smaller than the curvature of the curved surface of the first corner part.

This configuration causes the respective intake air flows guided by the respective guide parts to further less interfere with each other, so that occurrence of turbulence of the intake air flows can be inhibited.

(3) Preferably, the second side face part and the second front face part may be formed into planar shapes, and the second side face part may be arranged perpendicularly to the second front face part.

As a result, the respective intake air flows guided by the respective guide parts is less likely to interfere with each other, and the second guide part can be encouraged to capture the moisture in the outside air.

(4) Preferably, the air intake opening may be provided along a side face of a vehicle body of the vehicle, and the air intake unit may communicate with the duct main body at a rear side of the vehicle corresponding to the intake downstream part.

As a result, it is possible to efficiently take the outside air (intake air) from the air intake opening into the intake part by utilizing the running air, so that the intake performance can be enhanced.

(5) Preferably, the first guide part may include a first water dropping opening that drops moisture adhering to the first side face part and the first front face part at a lower position opposing to the first top face part, and the second guide part may include a second water dropping opening that drops moisture adhering to the second side face part and the second front face part at a lower position opposing to the second top face part.

With this structure, the moisture in the outside air mainly captured by the first front face part in the first guide part can be removed by being dropped from the first water dropping opening and the moisture in the outside air mainly captured by the second front face part in the second guide part can be removed by being dropped from the second water dropping opening.

(6) Preferably, the air intake guide member may be arranged in the air intake unit on the intake downstream side further than the second guide part and includes a third guide part including a third top face part and a third side face part protruding from the air intake opening to the deep side of the air intake unit and being continuous to each other, and a third front face part being arranged in the air intake unit on the deep side of the air intake unit and being smoothly continuous to the third top face part and the third side face part, the third guide part guiding the outside air entering through the air intake opening to the downstream side, and a curvature of a curved surface of a third corner part that makes the third side face part and the third front face part of the third guide part smoothly continuous may be set equal to or larger than the curvature of the curved surface of the second corner part that makes the second side face part and the second front face part of the second guide part smoothly continuous.

As a result, the intake air flows guided by the first guide part, the second guide part, and the third guide part are less likely to interfere with one other, so that occurrence of turbulence of the intake air flows can be suppressed.

(7) Preferably, a difference between the protruding amount of the first guide part to the deep side of the air intake unit and the protruding amount of the second guide part to the deep side of the air intake unit may be same or substantially same as a difference between the protruding amount of the second guide part to the deep side of the air intake unit and a protruding amount of the third guide part to the deep side of the air intake unit.

As a result, the intake air flows guided by the first guide part, the second guide part, and the third guide part are less likely to interfere with one other, so that occurrence of turbulent flow of the intake air can be suppressed.

### [Advantageous Effects of Invention]

According to the present invention, it is possible to suppress generation of turbulence of the intake air flows in the intake duct. Thus, the water separation performance can be improved.

### [Brief Description of Drawings]

[FIG. 1] FIG. 1 is a side view of an arranging side (vehicle right side) of an air intake duct of a roof unit of a vehicle provided with an air intake duct structure for a vehicle according to one embodiment.
[FIG. 2] FIG. 2 is a perspective view of the roof unit of the vehicle of FIG. 1 seen from above and front of the arranging side (vehicle right side) of the air intake duct.
[FIG. 3] FIG. 3 is a diagram showing perspective views of the main part of the roof unit of the vehicle of FIG. 1 seen from above and rear, FIG. 3(a) showing a state where the air intake duct is removed, and FIG. 3(b) showing a state where the air intake duct is attached.
[FIG.4] FIG. 4 is an exploded perspective view of an air intake unit of an air intake duct provided with an air intake duct structure of the one embodiment.
[FIG. 5] FIG. 5 is a perspective view of an external appearance of the air intake unit of FIG. 4.
[FIG. 6] FIG. 6 is a cross sectional view (sectioned by arrows A-A of FIG. 2) of the main part (arranging side of the air intake duct) of the roof unit of the vehicle of FIGs. 1 and 2.
[FIG. 7] FIG. 7 is a perspective view of an air intake guide member provided to the air intake unit of FIG. 4 seen from outside.
[FIG. 8] FIG. 8 is an edge face view (seen from Arrow B of FIG. 7) of the air intake guide member of FIG. 7, the bold line in FIG. 8 representing a cross section.
[FIG. 9] FIG. 9 is a top face view (seen from Arrow C of FIG. 7) of the air intake guide member of FIG. 7.
[FIG. 10] FIG. 10 is a bottom face view (seen from Arrow D of FIG. 7) of the air intake guide member of FIG. 7.
[FIG. 11] FIG. 11 is a perspective view of the air intake guide member of FIG. 7 seen from inside and obliquely from rear.
[FIG. 12] FIG. 12 is a perspective view of the air intake guide member of FIG. 7 seen from inside and obliquely from front.
[FIG. 13] FIG. 13 is a horizontal cross sectional view of the air intake unit showing an example of a result of simulating a flow velocity distribution of intake air at the air intake unit of FIG. 4 while the vehicle is running.
FIG. 14] FIG. 14 is a vertical cross sectional view of the air intake unit showing an example of a result of simulating a flow velocity distribution of intake air at the air intake unit of FIG. 4 while the vehicle is running.

### [Description of Embodiments]

With reference to the drawings, an embodiment of the present invention will now be described. This embodiment is merely an example, and is not intended to exclude the application of various modifications and techniques not explicitly described in or less embodiment. Each configuration of the present embodiment can be variously modified and implemented without departing from the scope thereof. Also, the configuration can be selected or omitted according to the requirement or appropriately combined.

### 1. Device Configuration:

The present embodiment assumes a truck as an example of a vehicle.

In the following explanation, a direction in which a vehicle moves forward is referred to as frontward FR, the opposite direction (the reverse direction of the vehicle) is referred to as rearward RR, and the left and right (leftward LH and rightward RH) are defined on the basis of a state where the vehicle directs frontward. The front-rear direction is also referred to as the vehicle longitudinal direction, and the left-right direction is also referred to as the vehicle width direction. Furthermore, a direction perpendicular to both the vehicle longitudinal direction and the vehicle width direction is referred to as an up-down direction (upward UP and downward DW). The vehicle shall be on a horizontal road surface and be in a posture in which the up-down direction matches the vertical direction (wherein the downward direction matches the direction of action of the gravity). In this posture, the vertical upward direction is referred to as the height direction.

### 1-1. Cab

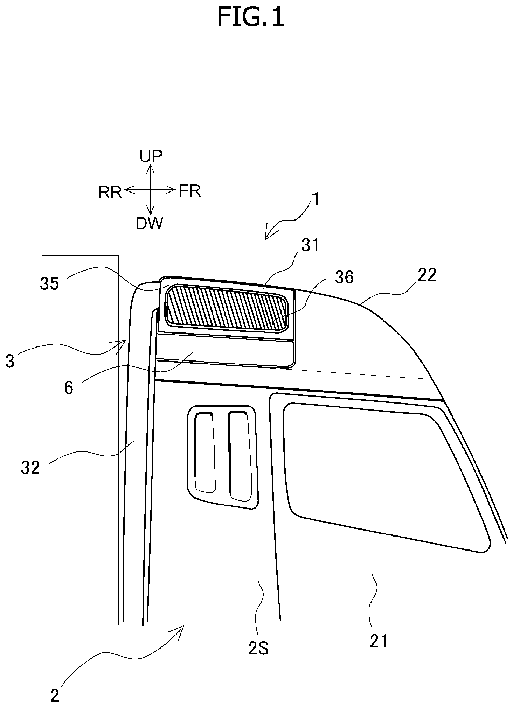

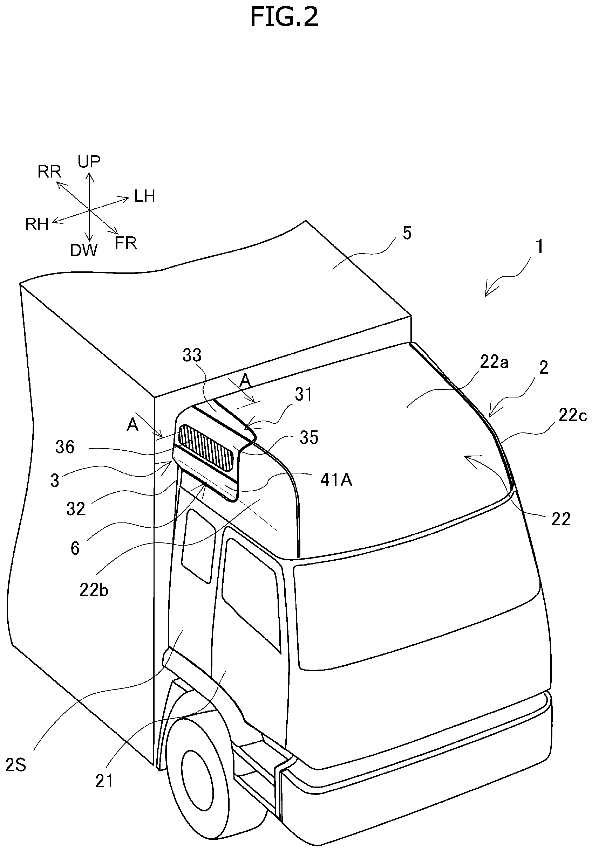

As shown in FIGs. 1 and 2, a vehicle 1 is of a so-called cab-over type. A cab 2 is provided at a front portion of the vehicle 1, and a non-illustrated engine is mounted on the downward DW side of the cab 2. The vehicle 1 of the present embodiment has the steering wheel on the right side, and a non-illustrated driver's seat is provided also on the right side in the cab 2. Doors 21 for getting on and off are provided on both the left and right side face parts (hereinafter also referred to as cab side faces) 2S of the cab 2. In the present embodiment, on the right side of the vehicle, an intake duct 3 that supplies air to the engine (internal combustion engine) serving as a power source (power apparatus) is provided. FIGs. 1 and 2 show only the side face part 2S and the door 21 on the right side of the vehicle, which side is provided with the intake duct 3. The rightward RH side of the intake duct 3 corresponds to the outer side of the vehicle, and the leftward side LH of the intake duct 3 corresponds to the inner side of the vehicle.

In addition, the vehicle 1 is formed as a high roof vehicle (hereinafter, referred to as a super-high-roof vehicle) that has a roof unit 22 formed at a higher position than a roof formed in a vehicle (a so-called high roof vehicle) in which the roof unit is positioned higher than a general roof (also referred to as ordinary roof). Since a super-high-roof vehicle can reserve a high interior space inside the cab 2, the occupancy in vehicle interior is enhanced, and in a large truck or the like, comfortability can be enhanced when the driver and the like rest in the vehicle cabin while traveling a long distance.

The roof unit 22 includes a center panel 22a constituting a front portion and a roof top portion of the roof, a side panel 22b constituting a right side portion of the roof, and a side portion panel 22c constituting a left side portion of the roof. The side panel 22b is welded to a right side edge of the center panel 22a, and the side panel 22c is welded to the left side edge of the center panel 22a. A non-illustrated skeleton member is provided inside the roof unit 22, and supports the roof unit 22.

In addition, in a normal roof truck, the cargo box is positioned higher than the roof unit, and therefore a portion of the front side of the cargo box higher than the roof unit directly receives running wind and consequently faces large air resistance. For this reason, by mounting a drag foiler (air deflector) on the upper portion of the cab, the normal roof truck try to reduce the air resistance and suppress deterioration in fuel efficiency. On the other hand, since having a roof unit as high as a mounted object (e.g. a van) such as a cargo box, a super-high-roof vehicle can reduce the air-resistance by utilizing the roof unit.

### 1-2. Intake Duct and Roof Structure

The vehicle 1 having the above configuration includes an intake duct 3, which supplies air to the engine (internal combustion engine) serving as a power source (power apparatus), on the upper side of the roof part 22. The intake duct 3 includes an air intake unit (or an air intake , hereinafter also referred to as snorkel) 31 installed in the roof unit 22 of the cab 2, and a duct unit (an intake duct main body) 32 arranged along a rear face 2B of the cab 2.

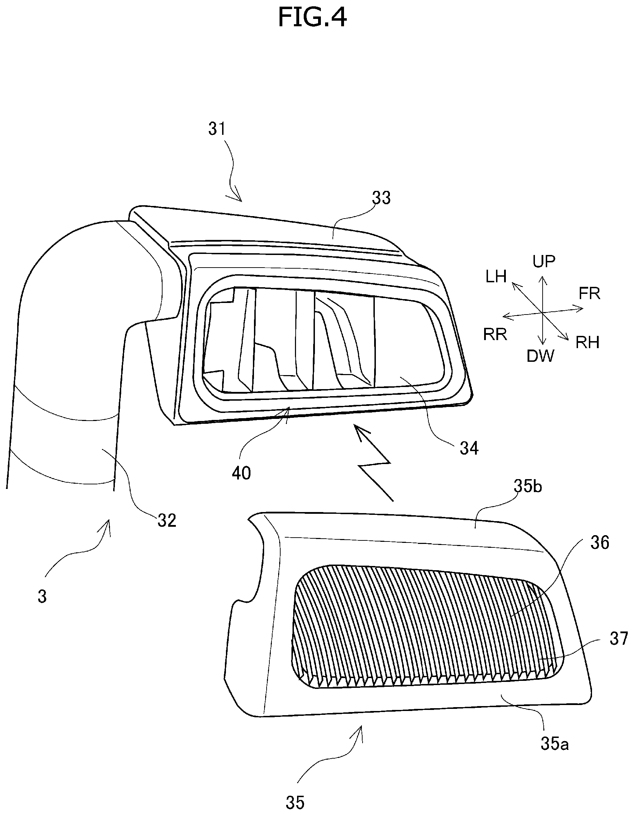

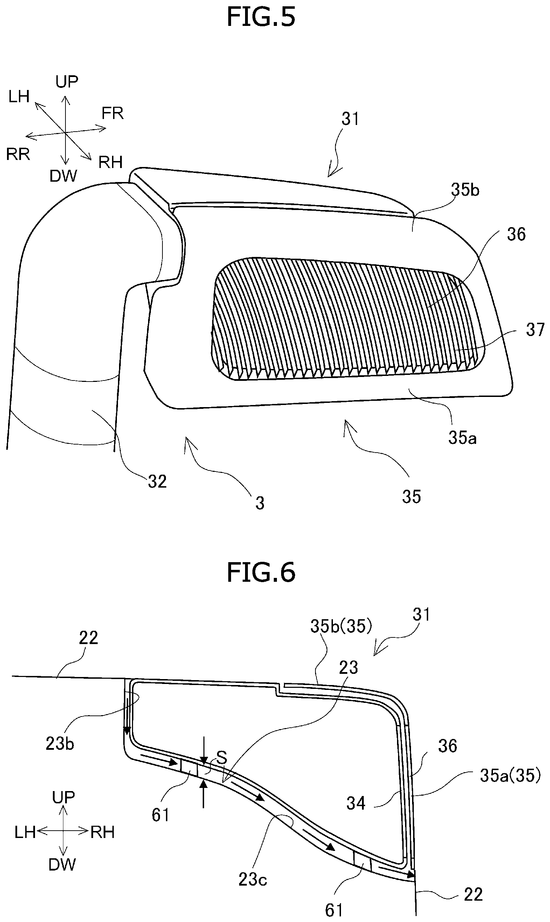

The snorkel 31 is an inlet for taking air from the atmosphere, and has a hollow shape. The snorkel 31 includes a head part 33 with an intake opening 34 (see FIGs. 4 and 6, hereinafter also referred to simply as "opening 34") which communicates with the duct unit 32 and faces a side of the vehicle 1, and, as shown in FIG. 5, a cover unit (hereinafter also referred to as a snorkel cover) 35 which is attached so as to cover the head part 33 and forms a part of the outer face of the roof unit 22.

In the present embodiment, the snorkel main body 33 is formed of a resin box, and includes the opening 34 on a face (right side face) facing the side of the vehicle 1.

In the present embodiment, the snorkel cover 35 is a cover member made of a resin panel having an L-shaped cross section, and includes a side face cover part 35a (see FIGs. 4 and 6) attached to the right side face of the snorkel main body 33, and a top face cover portion 35b attached to a part of the top face and the rear face of the snorkel main body 33.

The side face cover part 35a is provided with a louver 36 at a position corresponding to the opening 34 (see FIGs. 4 and 6) of the snorkel main body 33. The louver 36 has multiple vanes 37, and takes air through gaps between the neighboring vanes 37 and suppresses intrusion of water (e.g., rainwater, snow, and the like) by the vanes 37. Air is taken into the snorkel 31 via the louver 36 and the opening 34.

Inside the snorkel main body 33, as shown in FIG. 4, an air intake guide member 40 (also referred to as a separator (partition plate), hereinafter, also simply referred to as an "air intake guide 40") is provided which separates the moisture such as rainwater from the taken outside air (intake air) and guides the intake air flow to the duct unit 32 on the downstream side.

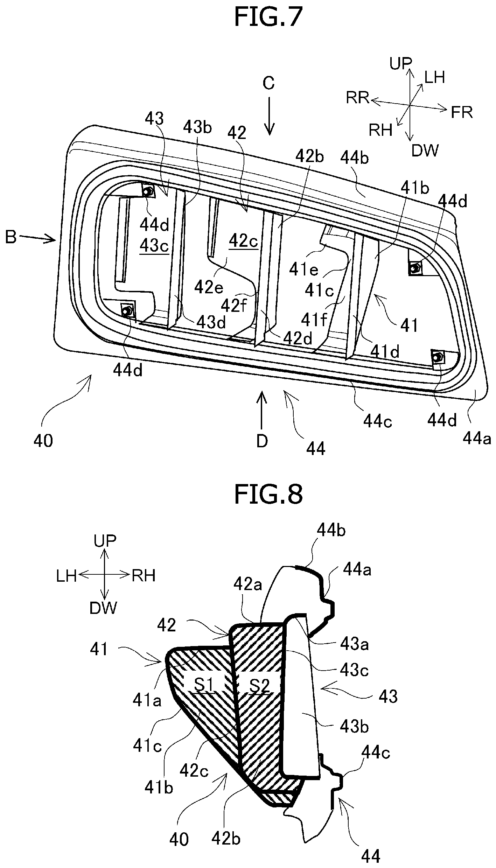

Although the air intake guide 40 will be detailed below, the flow of the outside air that has passed through the louver 36 and the opening 34 is guided through by the intake guide 40, and the moisture such as rainwater in the outside air is captured when the outside air hits the guide parts 41-43 (see FIG. 7) of the air intake guide 40 and is guided to fall onto a bottom face of the snorkel main body 33 by the air intake guide 40, so that the moisture is separated from the air.

A non-illustrated drain for draining out the separated rainwater and the like is provided on the bottom face at the frontward portion of the snorkel main body 33. The drain is provided with a non-illustrated valve which is opened and closed by an intake pulsation of the non-illustrated engine. With this structure, for example, when the vehicle is stopping, the valve is closed to suppress discharge from the drain, and when the vehicle is running, the valve is opened by the intake pulsation of the engine, so that the rainwater and the like is discharged from the drain.

The duct part 32 is a portion that serves as an air passage between the snorkel 31 and the engine, and is formed in a cylindrical shape extending downward DW from the rear end portion of the snorkel 31 in the present embodiment. The inside of the snorkel 31 and the inside of the duct unit 32 communicate with each other, and the air taken in by the snorkel 31 is supplied to the intake portion of the engine through the duct unit 32.

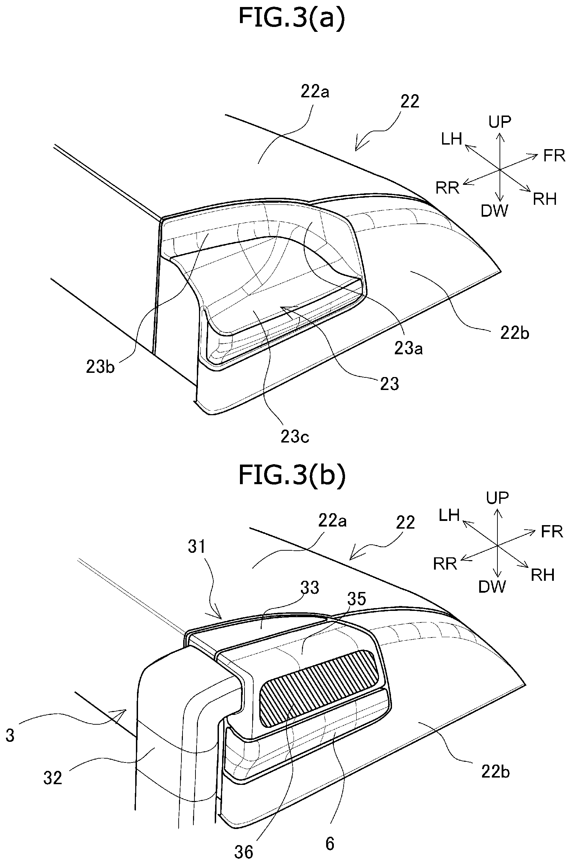

The snorkel 31 is arranged on the roof in a normal roof vehicle, but the vehicle 1 according to the present embodiment, which is a super high roof vehicle, forms a recess part 23 (see FIG. 3(a)) by recessing a part of the roof unit 22 of the cab 2 and arranges the snorkel main body 33 in the recess part 23. Since the snorkel 31 is arranged at the right side of the rear portion of the cab 2, a recess part 23 is formed at the right side (driver's seat side) of the rear portion of the roof unit 22 accordingly.

FIGs. 3(a) and 3(b) are perspective views of the main part of the roof unit 22 of the vehicle 1 seen from above and rear on the arranging side (vehicle right side). In FIGs. 3(a) and 3(b), the outline lines and the edge-like bending portions bent at relatively sharp angles are represented by the thick lines and explanatory lines for explaining curved surface shapes are represented by thin lines. FIG. 3(a) shows a state in which the intake duct is removed, and FIG. 3(b) shows a state in which the intake duct is attached.

As illustrated in FIG. 3(a), in the present embodiment, the recess part 23 is formed so as to be recessed at the rear portion of the right side panel 22b of the roof unit 22 downward DW further than the roof surface of the roof unit 22.

The recess part 23 includes a side face part 23a on the frontward FR side of the vehicle, a side face part 23b on the center side of the vehicle, and a bottom face portion 23c, and is formed such that the side face part 23a and the side face part 23b are continuous via a smooth curved face, the side face part 23a and bottom face portion 23c are continuous via a smooth curved face, and the side face part 23b and bottom face portion 23c are continuous via a smooth curved face. The bottom face portion 23c is formed so as to be declined toward the outer side in the vehicle width direction, i.e., declined rightward and also be declined toward the frontward of the vehicle in the vehicle longitudinal direction, i.e., declined frontward FR.

In the present embodiment, as shown in FIGs. 3(a) and 6, the bottom face portion 23c is formed into a curved surface shape vehicle center side of which slightly protrudes upward and also into a curved surface shape cab side face 2S side of which slightly protrudes downward, the two curved surfaces being smoothly connected to each other. However, this shape of the bottom face portion 23c is exemplary and is sufficient to be declined downward toward the cab side face 2S.

As shown in FIG. 3(b), the snorkel 31 of the intake duct 3 is accommodated in the recess part 23, and the side face part and the bottom face part of the snorkel main body 33 on the inner side of the vehicle width direction are formed into a curved surface shape conforming with the side face parts 23a and 23b and the bottom face portion 23c of the recess part 23. As shown in FIG. 6, the snorkel main body 33 is fixed to the bottom face portion 23c via one or more installing members 61, being spaced apart from each other by a space S. This space S allows the rainwater and the like to flow between the snorkel main body 33 and the bottom face portion 23c.

In the present embodiment, as shown in FIG. 3(b), the outer surfaces of the upper portion and the outer side in the vehicle width direction of the snorkel 31 are formed into curved faces smoothly continuous to the curved face of the roof unit 22. In addition, on the downward DW side of the intake opening 34 of the snorkel 31, a curved face plate 6 is fixed to form a curved outer surface of the vehicle curved into a desired shape.

### 1-3. Detailed Configuration of Intake Air Guide Member

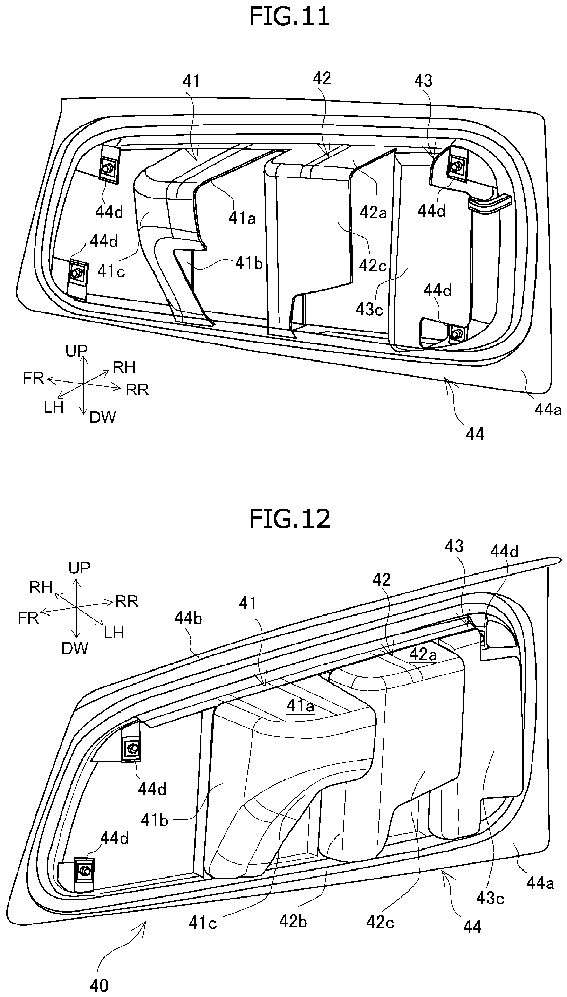

Hereinafter, description will now be made in relation to the air intake guide 40 installed inside the snorkel main body 33 of the snorkel (air intake unit) 31 with reference to FIGs. 7-12. In the present embodiment, the air intake guide 40 is made of resin.

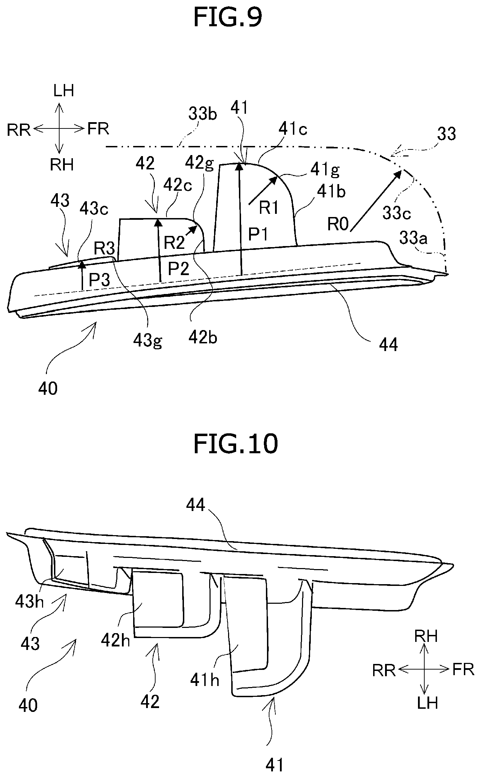

The snorkel main body 33 includes, as shown by a two-dot dash line in FIG. 9, a side face wall part 33a extending from the opening 34 toward the deep side of the snorkel main body 33 (the inner side in the vehicle width direction, upward in FIG. 9) on an intake upstream side, and a front face wall part 33b being smoothly continuous to the side face wall part 33a via the corner wall part 33c and also extending from side face wall part 33a toward the intake downstream side (leftward in FIG. 9).

The air intake guide 40 includes a frame part 44 which is fixed to the opening 34, a first guide part 41, a second guide part 42, and a third guide part 43. The first guide part 41, the second guide part 42, and the third guide part 43 are supported by a frame part 44 so as to protrude from the intake opening 34 to the deep side of the snorkel main body 33.

The fame part 44 is formed into a frame shape conforming to the shape of the opening 34 of the snorkel main body 33, and includes a base face part 44a along the outer surface shape of a side portion of the outer side in the vehicle width direction of the edge portion of the opening 34, a top face part 44b along an outer surface shape of an upper edge portion of the edge portion of the opening 34, an annular rib part 44c protruding outward in the vehicle width direction along the edge portion of the opening 34 and extending in a substantially rectangular shape having a lateral length longer than a longitudinal length, and installing tip parts 44d formed to protrude inward from the four corners on the inside of the base portion of the annular rib part 44c. To the installing tip parts 44d, the louver 36 is attached via fastening tools such as nuts.

The first guide part 41 is arranged on the intake upstream side in the snorkel main body 33 (in the present embodiment, on the frontward FR side of the vehicle 1), and includes a first top face part 41a and a first side face part 41b that protrude toward a deep side of the snorkel main body 33 (inward in the width direction of the vehicle 1) from the opening 34 and are continuous to each other, and a first front face part 41c that is arranged at the deep side of the snorkel main body 33 and is smoothly continuous to the first top face part 41a and the first side face part 41b.

The first top face part 41a protrudes from the lower edge of the upper portion of the annular rib part 44c toward the deep side of the snorkel main body 33. The first side face part 41b protrudes into the deep side of the snorkel main body 33 from the thick-walled portion 41d spanned between the lower edge of the upper portion and the upper edge of the lower portion of the annular rib part 44c.

The first front face part 41c is formed to be smoothly continuous to the first top face part 41a and the first side face part 41b, and includes a front main part 41e that is positioned immediately under the first top face part 41a and faces toward the opening 34, and a front lower part 41f that is continuous to and is positioned to immediately under the front main part 41e, has a base end approximated to the lower portion of the annular rib part 44c, directs obliquely upward, and has an intake downstream side being partially cut out.

The first guide part 41 further includes a first corner part 41g that smoothly connects the first side face part 41b and the first front face part 41c to each other. The first corner part 41g is formed to have a predetermined curvature C1.

The second guide part 42 is arranged on the intake downstream side (in the present embodiment, on the rearward RR side of the vehicle 1) further than and adjacent to the second guide part 42 in the snorkel main body 33, and includes a second top face part 42a and a second side face part 42b that protrude toward the deep side of the snorkel main body 33 (inward in the width direction of the vehicle 1) and are continuous to each other, and a second front face part 42c that is arranged at the deep side of the snorkel main body 33 and is smoothly continuous to the second side face part 42b and the second top face part 42a.

The second top face part 42a protrudes from the lower edge of the upper portion of the annular rib part 44c toward the deep side of the snorkel main body 33. The second side face part 42b protrudes into the deep side of the snorkel main body 33 from the thick-walled portion 42d spanned between the lower edge of the upper portion and the upper edge of the lower portion of the annular rib part 44c.

The second front face part 42c is formed to be smoothly continuous to the second top face part 42a and the second side face part 42b, and includes a front main part 42e that is positioned immediately under the second top face part 42a and faces toward the opening 34, and a front lower part 42f that is continuous to and is positioned to immediately under the front main part 42e, has a base end approximated to the lower portion of the annular rib part 44c, and has an intake downstream side being partially cut out.

The second guide part 42 further includes a second corner part 42g that smoothly connects the second side face part 42b and the second front face part 42c to each other. The second corner part 42g is formed to have a predetermined curvature C2.

The third guide part 43 is arranged on the intake downstream side (in the present embodiment, on the rearward RR side of the vehicle 1) further than and adjacent to the third guide part 43 in the snorkel main body 33, and includes a third top face part 43a and a third side face part 42b that protrude toward the deep side of the snorkel main body 33 (inward in the width direction of the vehicle 1) and are continuous to each other, and a third front face part 43c that is arranged at the deep side of the snorkel main body 33 and is smoothly continuous to the third side face part 43b and the third top face part 43a.

The third top face part 43a protrudes from the lower edge of the upper portion of the annular rib part 44c toward the deep side of the snorkel main body 33. The third side face part 43b protrudes into the deep side of the snorkel main body 33 from the thick-walled portion 43d spanned between the lower edge of the upper portion and the upper edge of the lower portion of the annular rib part 44c.

The third front face part 43c is formed to be smoothly continuous to the third top face part 43a and the third side face part 43b, and faces the intake opening 34. The downstream sides of the upper edge and the lower edge of the third front part 43c is partially cut out.

The third guide part 43 further includes a third corner part 43g that smoothly connects the third side face part 43b and the third front face part 43c to each other. The third corner part 43g is formed to have a predetermined curvature C3.

Further, the inner surface of the corner wall part 33c on the intake upstream side (on the frontward FR side of the vehicle 1 in the present embodiment) of the snorkel main body 33 is also formed so as to be smoothly curved at a predetermined curvature C0.

In FIG. 9, the curvatures C0 to C3 are replaced with radii R0 to R3 of curvature which are correlated with the curvatures (i.e., inverses of the curvatures), respectively.

As shown in FIG. 9, the curvature C1 of the curved surface of the first corner part 41g of the first guide part 41 is set smaller than the curvature C2 of the curved surface of the second corner part 42g of the second guide part 42. Furthermore, the curvature C0 of the inner surface of the corner wall portion 33c of the snorkel main body 33 is set smaller than the curvature C1 of the curved surface of the first corner part 41g of the first guide part 41. Still furthermore, the curvature C2 of the curved surface of the second corner part 42g of the second guide part 42 is set smaller than the curvature C3 of the curved surface of the third corner part 43g of the third guide part 43.

That is, the flow (intake air flow) of the outside air flowing in from the outside of the opening 34 by the running wind curves to the intake downstream side (leftward in FIG. 9) where the duct unit 32 is located while moving to the deep side of the snorkel main body 33. The curved flow is guided by the inner wall surface of the snorkel main body 33, the first guide part 41, the second guide part 42, and the third guide part 43. The outermost flow (the upper side of the first front face part 41c in FIG. 9) is guided by the inner surfaces (indicated by the two-dot dashed line in FIG. 9) of the side face wall part 33a on the intake upstream side of the snorkel main body 33, the corner wall part 33c, and the inner surfaces of the front face wall part 33b. The flow passing through the second outermost side (lower than the first front face part 41c in FIG. 9) is guided by the inner surface of the first guide part 41 (the first side face part 41b, the first corner part 41g, and the first front face part 41c). The flow passing through the inside (lower than the second front face part 42c in FIG. 9) thereof is guided by the inner surface of the second guide part 42 (the second side face part 42b, the second corner part 42g, and the second front face part 42c). The innermost flow (lower than the third front face part 43c in FIG. 9) is guided by the inner surface of the third guiding portion 43 (the third side face part 43b, the third corner part 43g, and the third front face part 43c).

Since the guiding surface of an intake air flow passing outer side is set to have a smaller curvature, the intake air flows guided by the inner surface of the snorkel main body 33, the inner surface of the first guide part 41, the inner surface of the second guide part 42, the inner surface of the third guide part 43 are less likely to interfere with one another, so that the generation of turbulence of the intake air flows can be suppressed.

Further, the respective face parts (the first top face part 41a, the first side face part 41b, and the first front face part 41c) of the first guide part 41, the respective face parts (the second top face part 42a, the second side face part 42b, and the second front face part 42c) of the second guide part 42, and the respective face parts (the third top face part 43a, the third side face part 43b, and the third front face part 43c) of the third guide part 43 are each formed in a planar in a most part. In particular, since the respective front face parts 41c-43c are directly opposed to the opening 34, the respective front face parts 41c-43c are set to mainly capture moisture with ease if the outside air contains moisture such as rainwater.

Further, the angle formed between the planar portion of the first side face part 41b and the planar portion of the first front face part 41c of the first guide part 41 is set larger than the right angle. The angle between the planar portion of the second side face part 42b and the planar portion of the second front face part 42c of the second guide part 42 is set at a right angle or substantially at a right angle. The angle formed between the planar portion of the third side face part 43b and the planar portion of the third front part 43c of the third guide part 43 is set smaller than the right angle. This setting of the angles also suppresses mutual interference of the intake air flows guided by the inner surfaces of the guide parts 41, 42, and 43.

As shown in FIG. 9, among the protruding amounts P1, P2, and P3 of the guide parts 41, 42, and 43 to the deep side of the snorkel main body 33, the protrusion amount P1 of the first guide part 41 is the largest, the protrusion amount P2 of the second guide part 42 is the second largest, and the protrusion amount P2 (*sic,* correctly P3) of the third guide part 43 is the smallest. Further, the difference d1(=P1-P2) between the protruding amount P1 of the first guide part 41 to the deep side of the snorkel main body 33 and the protruding amount P2 of the second guide part 42 to the deep side of the snorkel main body 33 and the difference d2(=P2-P3 between the protruding amount P2 of the second guide part 42 to the deep side of the snorkel main body 33 and the protruding amount P3 of the third guide part 43 to the deep side of the snorkel main body 33 may be set the same or substantially the same.

By this setting, the amounts of the intake air guided by the first guide part 41 and the second guide part 42, which are the principals of the guide of the intake air, becomes well balanced, so that the load is suppressed from being varied to a certain one of the guide parts.

Further, as shown in FIG. 10, the first guide part 41 includes, at a lower position opposing to the first top face part 41a, a first water dropping opening 41h that drops moisture adhering to the first side face part 41b and the first front face part 41c. In addition, the second guide part 42 includes, at a lower position opposing to the second top face part 42a, a second water dropping opening 42h that drops moisture adhering to the second side face part 42b and the second front face part 42c. Furthermore, the third guide part 43 includes, at a lower position opposing to the third top face part 43a, a third water dropping opening 43h that drops moisture adhering to the third side face part 43b and the third front face part 43c.

As illustrated by the hatched parts in FIG. 8, a flowing-path area S1 of the cross section of downstream side of the first guide part 41 is set the same as or substantially the same as the flowing-path area S2 of the cross section of downstream side of the second guide part 42.

FIG. 8 is an arrow view in the direction B of FIG. 7, and the bold lines in FIG. 8 representing cross sections of the first guide part 41, the second guide part 42, and the third guide part 43. The flowing-path area S1 of the cross section of downstream side of the first guide part 41 is a cross section obtained by cutting the flow path partitioned by the first guide part 41 and the second guide part 42 perpendicularly to the flow direction thereof (the direction toward the inlet of the duct unit 32, that is, rearward RR).

### 2. Actions and Effects

The vehicle according to the present embodiment, which has the structure described above, can obtain the following actions and effects.

(1) Since the curvature C1 of the curved surface of the first corner part 41g of the first guide part 41 is set smaller than the curvature C2 of the curved surface of the second corner part 42g of the second guide part 42, the intake air flows guided by the first guide part 41 and the second guide part 42 are less likely to interfere with each other, so that the generation of turbulence of the intake air flows can be suppressed. Consequently, the water separatability can be enhanced.
(2) The curvature C0 of the corner wall portion 33c of the snorkel main body 33 is set smaller than the curvature C1 of the curved surface of the first corner part 41g, the intake air flows guided by the corner wall portion 33c and the first guide part 41 is less likely to interfere with each other, so that the generation of turbulence of the intake air flows can be suppressed. Consequently, the water separatability can be enhanced.
(3) Since the respective face parts (the first top face part 41a, the first side face part 41b, and the first front face part 41c) of the first guide part 41, the respective face parts (the second top face part 42a, the second side face part 42b, and the second front face part 42c) of the second guide part 42, and the respective face parts (the third top face part 43a, the third side face part 43b, and the third front face part 43c) of the third guide part 43 are each formed in a planar in a most part, the respective front face parts 41c-43c are set to mainly capture moisture with ease if the outside air contains moisture such as rainwater. Consequently, the water separatability can be enhanced.

Further, by setting the angle formed between the planar portion of the second side face part 42b and the planar portion of the second front face part 42c of the second guide part 42 at a right angle or substantially at a right angle and setting the angle formed between the planar portion of the first side face part 41b and the planar portion of the first front face part 41c of the first guide part 41 larger than the right angle, and setting the angle formed between the planar portion of the third side face part 43b and the planar portion of the third front face part 43c of the third guide part 43 smaller than the right angle, mutual interference of the intake air flows guided by the inner surfaces of the respective guide part 41, 42, and 43 can be suppressed.

(4) The opening 34 is arranged to the side face of the vehicle body of the vehicle 1, and the snorkel 31 is communicated with the duct unit 32 at the rearward RR side of the vehicle 1, which is the intake downstream portion, so that air can be efficiently taken by using running wind as well as negative pressure of the internal combustion engine.
(5) Since the first water dropping opening 41h of the first guide part 41 and the second water dropping opening 42h of the second guide part 42 are provided, the intake air guiding function and the water separating function in each the first guide part 41 and the second guide part 42 can be separated, and the intake air guiding capability and the water separatability can be enhanced.
(6) In the present embodiment, the third guide part 43 is provided, and the curvature C3 of the curved surface of the third corner part 43g of the third guide part 43 is set to be equal to or larger than curvature C2 of the curved surface of the second corner part 42g of the second guide part 42, so that intake air flows guided by the second guide part 42 and the third guide part 43 are less likely to interfere with each other, and the generation of turbulence of the intake air flows can be suppressed. Consequently, the water separatability can be enhanced.
(7) Since the difference d1(=P1-P2) between the protruding amount P1 of the first guide part 41 to the deep side of the snorkel main body 33 and the protruding amount P2 of the second guide part 42 to the deep side of the snorkel main body 33 and the difference d2(=P2-P3 between the protruding amount P2 of the second guide part 42 to the deep side of the snorkel main body 33 and the protruding amount P3 of the third guide part 43 to the deep side of the snorkel main body 33 may be set to be the same or substantially the same, the amounts of the intake air guided by the first guide part 41 and the second guide part 42, which are the principals of the guide of the intake air, becomes well balanced to suppress the load variation with the guide parts. As a result, the intake efficiency can be enhanced.

Then, since the flowing-path area S1 of the cross section of downstream side of the first guide part 41 is set the same as or substantially the same as the flowing-path area S2 of the cross section of downstream side of the second guide part 42, outside air is guided by the first guide part 41 and the second guide part 42 and thereby efficiently taken to ensure an amount of intake air and water can be separated by both the first guide part 41 and the second guide part 42, so that water separatability can be further enhanced.

Further, by suppressing the generation of turbulence of the intake air flow in the intake duct, generation of intake noise can be expected to be suppressed.

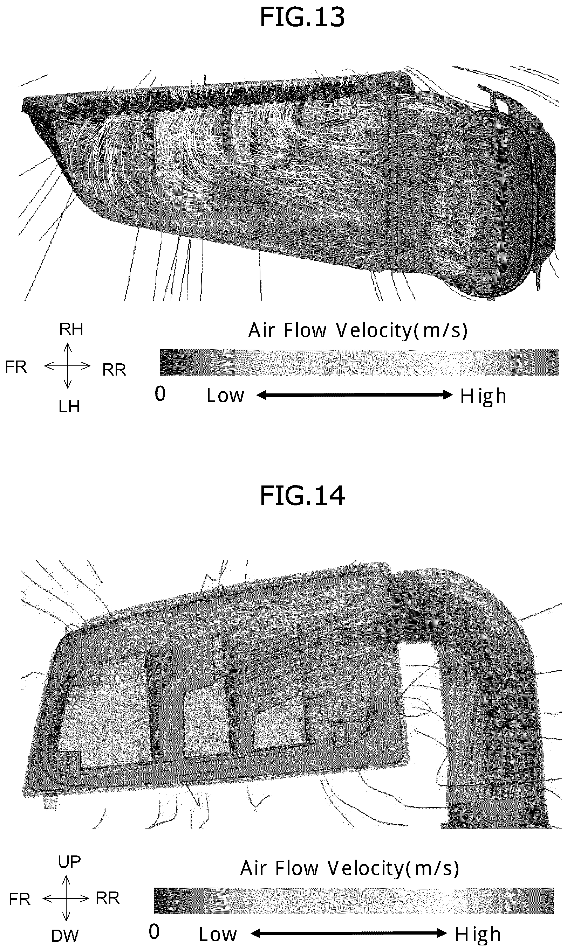

In addition, FIGs. 13 and 14 are a horizontal cross sectional view and a vertical cross sectional view of the air intake unit showing examples of results of simulating a flow velocity distribution of intake air at the air intake unit while the vehicle is running, respectively. As shown in the drawings, it can be seen that the flow velocity at the outlet of the snorkel can be increased while reducing the flow velocity at the inlet of the snorkel, so that the flow velocity can be lowered to surely separate moisture and to reserve the necessary amount of intake air.

### 3. Miscellaneous

In the above embodiment, the third guide part 43 is provided, and the curvature C3 of the curved surface of the third corner part 43g of the third guide part 43 is set to be equal to or larger than curvature C2 of the curved surface of the second corner part 42g of the second guide part 42, but this setting is not essential.

Further, although the relationship between the difference d1 between the protrusion amount P1 of the first guide part 41 and the protrusion amount P2 of the second guide part 42 and the difference d2 between the protrusion amount P2 of the second guide part 42 and the protrusion amount P3 of the third guide part 43 is defined, this relationship is not essential.

The degrees of the angles formed by side face parts 41b,42b, and 43b of the respective corresponding front face parts 41c, 42c, and 43c of the guide parts 41, 42, and 43 are defined, but these degrees are not essential.

Further, although the relationship between the curvature C0 of the corner wall portion 33c of the snorkel main body 33 and the curvature C2 (*sic,* correctly C1) of the curved surface of the first corner part 41g is defined, this relationship is not essential.

In the above embodiment, the opening 34 is arranged on a side face of the vehicle body of the vehicle 1, but this arrangement is not essential. If the opening 34 is arranged to a side face of the vehicle body of the vehicle, the intake upstream side is the frontward FR side of the vehicle. However, this direction may be different with the position of the opening 34.

In the above embodiment, the intake duct 3 is assumed to supply air to an engine (internal combustion engine) serving as a power source (power apparatus), but the intake duct is not limited to this. Alternatively, the intake duct may, for example, supply powering air (air for power generation) to an inlet for air intake of a hydrogen-fuel vehicle (e.g., fuel-cell vehicle, a hydrogen engine vehicle).

Further, the above embodiment exemplifies a truck as an example of the vehicle, but the roof structure according to the present invention is applicable not only to a truck but also to various types of vehicle.

### 4. Appendix

In relation to the above embodiment, the following Appendices will now be disclosed.

### (Appendix 1)

An air intake duct structure for a vehicle that takes outside air into a power apparatus of the vehicle, the air-intake duct structure comprising:
a hollow that includes an air intake opening provided along a vehicle surface of the vehicle and that communicates with an intake duct main body on an intake downstream side thereof; and
an air intake guide member that is provided inside the air intake unit, wherein
the air intake guide member comprises
   a first guide part that is arranged in the air intake unit on an intake upstream side and that comprises a first top face part and a first side face part protruding from the air intake opening to a deep side of the air intake unit and being continuous to each other, and a first front face part being arranged in the air intake unit on a deep side of air intake unit and being smoothly continuous to the first top face part and the first side face part, and that guides outside air entering through the air intake opening to a downstream side, and
   a second guide part that is arranged on an intake downstream side further than the first guide part in the air intake unit side by side and that comprises a second top face part and a second side face part protruding from the air intake opening to the deep side of the air intake unit and being continuous to each other, and a second front face part being arranged on the deep side of the air intake unit and being smoothly continuous to the second top face part and the second side face part, and that guides the outside air entering through the air intake opening to the downstream side,
a protruding amount first guide part to the deep side of the air intake unit is larger than a protruding amount of the second guide part the deep side of the air intake unit., and
a curvature of a curved surface of a first corner part that makes the first side face part and the first front face part of the first guide part smoothly continuous is set smaller than a curvature of a curved surface of a second corner part that makes the second side face part and the second front face part of the second guide part smoothly continuous.

### (Appendix 2)

The air intake duct structure according to appendix 1, wherein
the air intake unit comprises a side face wall part arranged on the intake upstream side and extending from the air intake opening to the deep side of the air intake unit, and a front face wall part smoothly and continuously extending from the side face wall part to the air intake downstream side through a corner wall part, and
a curvature of the corner wall part is set smaller than the curvature of the curved surface of the first corner part.

### (Appendix 3)

The air intake duct structure according to appendix 1 or 2, wherein
the second side face part and the second front face part are formed into planar shapes, and
the second side face part is arranged perpendicularly to the second front face part.

### (Appendix 4)

The air intake duct structure according to any one of appendices 1-3, wherein
the air intake opening is provided along a side face of a vehicle body of the vehicle, and
the air intake unit communicates with the duct main body at a rear side of the vehicle corresponding to the intake downstream part.

### (Appendix 5)

The air intake duct structure according to any one of appendices 1-4, wherein
the first guide part comprises a first water dropping opening that drops moisture adhering to the first side face part and the first front face part at a lower position opposing to the first top face part, and
the second guide part comprises a second water dropping opening that drops moisture adhering to the second side face part and the second front face part at a lower position opposing to the second top face part.

### (Appendix 6)

The air intake duct structure according to any one of appendices 1-5, wherein a cross section of a flow path downstream of the first guide part is same or substantially same as a cross section of a flow path downstream of the second guide part.

### (Appendix 7)

The air intake duct structure according to any one of any one of appendices 1-6, wherein
the air intake guide member is arranged in the air intake unit on an intake downstream side further than the second guide part and comprises a third guide part comprising a third top face part and a third side face part protruding from the air intake opening to the deep side of the air intake unit and being continuous to each other, and a third front face part being arranged in the air intake unit on the deep side of the air intake unit and being smoothly continuous to the third top face part and the third side face part, the third guide part guiding the outside air entering through the air intake opening to the downstream side, and
a curvature of a curved surface of a third corner part that makes the third side face part and the third front face part of the third guide part smoothly continuous is set equal to or larger than the curvature of the curved surface of the second corner part that makes the second side face part and the second front face part of the second guide part smoothly continuous.

### (Appendix 8)

The air intake duct structure according to appendix 7, wherein
a difference between the protruding amount of the first guide part to the deep side of the air intake unit and the protruding amount of the second guide part to the deep side of the air intake unit is same or substantially same as a difference between the protruding amount of the second guide part to the deep side of the air intake unit and a protruding amount of the third guide part to the deep side of the air intake unit.

### [Reference Signs List]

1: vehicle
2: cab
2S: side face part of cab 2 (cab side face)
21: door
22: roof unit
22a: center panel of roof unit 22
22b,22c: side panel of roof unit 22
23: recess part
23a,23b: side face part of recess part 23
23c: bottom face part of recess part 23
24: water guiding unit
25a-25e: linear protrusion
26a-26e: groove
3: air intake duct
31: air intake unit (snorkel)
32: duct unit (intake duct main body)
33: head part (snorkel main body)
33a: side face wall part
33b: front face wall part
33c: corner wall part
34: opening
35: snorkel cover (cover unit)
35a: side face cover part
35b: top face cover part
36: louver
37: vane
40: air intake guide (air intake guide member)
41: first guide part
41a: first top face part
41b: fist side face part
41c: first front face part
41d: thick part
41e: front main part
41f: front lower part
41g: first corner part
41h: first water dropping opening
42: second guide part
42a: second top face part
42b: second side face part
42c: second front face part
42d: thick part
42e: front main part
42f: front lower part
42g: second corner part
42h: second water dropping opening
43: third guide part
43a: third top face part
43b: third side face part
43c: third front face part
43d: thick part
43g: third corner part
43h: third water dropping opening
44: frame part
44a: base face part of frame part 44
44b: top face part of frame part 44
44c: annular rib part of frame part 44
44d: installing tip part of frame part 44
6: curved face plate
61: installing member
S: space
C0: curvature of inner face of intake upstream side of snorkel main body 33
C1: curvature of first corner part 41g
C2: curvature of second corner part 42g
C3: curvature of third corner part 43g
S1: flowing-path area of cross section of downstream side of first guide part 41
S2: flowing-path area of cross section of downstream side of second guide part 42
FR: frontward
RR: rearward
LH: leftward
RH: rightward
UP: upward
DW: downward

## Claims

1. An air intake duct structure for a vehicle that takes outside air into a power apparatus of the vehicle, the air-intake duct structure comprising:
a hollow air intake unit that includes an air intake opening provided along a vehicle surface of the vehicle and that communicates with an intake duct main body on an intake downstream side thereof; and
an air intake guide member that is provided inside the air intake unit, wherein
the air intake guide member comprises
a first guide part that is arranged in the air intake unit on an intake upstream side and that comprises a first top face part and a first side face part protruding from the air intake opening to a deep side of the air intake unit and being continuous to each other, and a first front face part being arranged in the air intake unit on a deep side of air intake unit and being smoothly continuous to the first top face part and the first side face part, and that guides outside air entering through the air intake opening to the downstream side, and
a second guide part that is arranged on the intake downstream side further than the first guide part in the air intake unit side by side and that comprises a second top face part and a second side face part protruding from the air intake opening to the deep side of the air intake unit and being continuous to each other, and a second front face part being arranged on the deep side of the air intake unit and being smoothly continuous to the second top face part and the second side face part, and that guides the outside air entering through the air intake opening to the downstream side,
a protruding amount first guide part to the deep side of the air intake unit is larger than a protruding amount of the second guide part the deep side of the air intake unit., and
a curvature of a curved surface of a first corner part that makes the first side face part and the first front face part of the first guide part smoothly continuous is set smaller than a curvature of a curved surface of a second corner part that makes the second side face part and the second front face part of the second guide part smoothly continuous.

2. The air intake duct structure according to claim 1, wherein
the air intake unit comprises a side face wall part arranged on the intake upstream side and extending from the air intake opening to the deep side of the air intake unit, and a front face wall part smoothly and continuously extending from the side face wall part to the intake downstream side through a corner wall part, and
a curvature of the corner wall part is set smaller than the curvature of the curved surface of the first corner part.

3. The air intake duct structure according to claim 1, wherein
the second side face part and the second front face part are formed into planar shapes, and
the second side face part is arranged perpendicularly to the second front face part.

4. The air intake duct structure according to claim 1, wherein
the air intake opening is provided along a side face of a vehicle body of the vehicle, and
the air intake unit communicates with the duct main body at a rear side of the vehicle corresponding to the intake downstream part.

5. The air intake duct structure according to claim 1, wherein
the first guide part comprises a first water dropping opening that drops moisture adhering to the first side face part and the first front face part at a lower position opposing to the first top face part, and
the second guide part comprises a second water dropping opening that drops moisture adhering to the second side face part and the second front face part at a lower position opposing to the second top face part.

6. The air intake duct structure according to any one of claims 1-5, wherein
the air intake guide member is arranged in the air intake unit on the intake downstream side further than the second guide part and comprises a third guide part comprising a third top face part and a third side face part protruding from the air intake opening to the deep side of the air intake unit and being continuous to each other, and a third front face part being arranged in the air intake unit on the deep side of the air intake unit and being smoothly continuous to the third top face part and the third side face part, the third guide part guiding the outside air entering through the air intake opening to the downstream side, and
a curvature of a curved surface of a third corner part that makes the third side face part and the third front face part of the third guide part smoothly continuous is set equal to or larger than the curvature of the curved surface of the second corner part that makes the second side face part and the second front face part of the second guide part smoothly continuous.

7. The air intake duct structure according to claim 6, wherein
a difference between the protruding amount of the first guide part to the deep side of the air intake unit and the protruding amount of the second guide part to the deep side of the air intake unit is same or substantially same as a difference between the protruding amount of the second guide part to the deep side of the air intake unit and a protruding amount of the third guide part to the deep side of the air intake unit.
